# EUROPEAN PATENT SPECIFICATION

(11) **EP 0 527 903 B1**
(45) Date of publication and mention of the grant of the patent: **28.12.1994**
(21) Application number: 91909792.3
(22) Date of filing: 08.05.1991
(51) Int. Cl.: B65B 55/19, B65D 81/24, C08L 77/00

(54) **CONTAINER AND A PROCESS FOR ITS PRODUCTION**
BEHÄLTER UND VERFAHREN ZU SEINER HERSTELLUNG
RECIPIENT ET SON PROCEDE DE PRODUCTION

(30) Priority: 11.05.1990 SE 9001706
(43) Date of publication of application: 24.02.1993
(73) Proprietor: PLM AB, 201 80 Malmö (SE)
(72) Inventor: FRANDSEN, Erik, DK-5260 Odense S (DK); MAZZONE, Rolando, DK-5466 Asperup (DK)
(74) Representative: Rostovanyi, Peter
(86) International application number: SE9100330
(87) International publication number: WO9117925

(56) References cited:
- EP-A- 0 288 972
- WO-A-90/00504
- JP-A-59 087 132

## Description

The present invention relates to improvements in packages and, in particular, to a container as more closely defined hereinbelow, with improved material properties, in particular oxygen barrier properties.

In cases of packages of plastic, both of the monolayer and multilayer type, such as cans, bottles, trays, etc., intended for foods, beverages including, for example, juice, wine, carbonated beverages, there is a constantly growing need for new materials with improved barrier properties in order to satisfy consumer demands for acceptable shelf-life.

Plastic materials possessing good barrier properties are previously known. For example, Chemical Abstracts, Vol. 100, 193165, 1984, describes polyester compositions with good oxygen barrier properties. Further examples of material with good oxygen barrier properties are a copolymer between vinyl alcohol and ethylene (EVOH), as well as polyvinylidene chloride (PVdC). One drawback inherent in EVOH is, int.al., that the barrier properties deteriorate drastically at elevated temperature and humidity. This entails that containers with EVOH layers, on autoclaving, lose the good oxygen barrier properties. In order further to improve such barrier properties, EP-A-301 719 has proposed polymer material intended for packages containing minor quantities of metal for obtaining a metal-catalyst governed oxidation which provides a barrier-promoting oxygen scavenger effect. However, the materials disclosed in this publication suffer from the drawback that the improved oxygen barrier properties do not manifest themselves fully until after a certain period of time, entitled by those skilled in the art an induction period. In aftertreatment at elevated temperature, the induction period may be shortened or eliminated. (According to this European publication, the induction period may be eliminated by means of ageing (during which a redistribution of the molecules probably takes place so that "reactive seats" are formed)).

The above EP-publication discloses a container according to the preamble of claim 1.

The problem outlined above, i.e. shortening or elimination of the induction period, is solved by a container, a process and a use as defined in the independent claims.

Before the present invention is described in greater detail with reference to preferred embodiments, there follow below definitions of expressions and concepts which occur often in the body of this specification.

"Oxygen barrier" is the ability of a plastic material to prevent the passage of oxygen. Its magnitude or value is often expressed as the reciprocal magnitude OTR ("Oxygen Transmission Rate") and is indicated in cc/24h. The lower the value, the better the barrier properties.

The term "layer" is to be interpreted very broadly. A container may consist of one "layer" which is homogeneous or inhomogeneous, or of a plurality of "layers" of different material compositions. "Layer" may also relate to a coating of normally slight extent (thickness). "Bounding definition" relates, in conjunction with containers, for example to a wall, a bottom or a mouth portion.

That effect which, according to the present invention, is responsible for the oxygen barrier properties, i.e. the ability of the material to withstand the passage of oxygen, is also entitled, in skilled circles, "the oxygen scavenger" effect. This will be described below with reference to such expressions as "consume", "destroy", "entrap", "eliminate", "oxygen-binding", etc.

The polyamide which at least in part is included in the barrier layer or barrier layers is, hereinbelow, often entitled "activated" polyamide, by which is taken to mean that a polyamide of optional variety has been subjected to partial splitting in order thereby to increase sensitivity to reaction with oxygen in the presence of certain metal ions. "Partial splitting" (alternatively "partial degradation") implies such a treatment of the polyamide that a portion of its molecules and/or groups is dissociated, with a restructuring thereof as a consequence. According to one preferred embodiment, this partial splitting is realized in that a polyamide is caused to react with a nucleophilic reagent, possibly in the presence of an activator, preferably under the melting conditions of the polyamide. According to another embodiment, this partial splitting is achieved in that a polyamide is subjected to thermal degradation, for example in an extruder (under melting conditions).

The activated polyamide included in the barrier layer or barrier layers has thus been obtained by partial splitting of a polyamide. The polyamides which are subjected to partial splitting are commercially available and may be of both aromatic and aliphatic nature. So-called copolyamides, i .e. copolymers of polyamides and other polymers are also encompassed within the scope of the present invention.

One preferred aromatic polyamide is a polymer which has been obtained by polymerization of meta-xylylene-diamine of the formula H₂NCH₂-m-C₆H₄-CH₂NH₂ and adipic acid of the formula HO₂C(CH₂)₄ CO₂H, for example a product manufactured and marketed by Mitsubishi Gas Chemical Company, Japan under the title MXD6. Preferred polyamides of aliphatic nature are nylon 6 (PA 6) and nylon 6.6 (PA 66). The choice of polymer is not critical, being determined rather by economic factors.

According one preferred embodiment, the activated polyamide is produced in that a polyamide is caused to react with a nucleophilic reagent, possibly in the presence of an activator in the form of a hydrogen donor, under such conditions that a uniform, homogeneous polyamide product, or an inhomogeneous polyamide product is obtained. According to a further preferred embodiment, the reaction is carried out in an extruder, in which the reaction temperature, at least during a part of the reaction, exceeds the melting temperature of the polyamide component. In such instance, the polyamide is present in granulate form or in powder form, while the nucleophilic reagent and the possible activator are present in granulate form, as a powder or as liquid. As non-restrictive examples of a liquid form nucleophilic reagent, mention might be made of lower polyethylene glycols and polypropylene glycols. The choice of the nucleophilic reagent and, where applicable, the activator is critical inasmuch as the nucleophilic reagent and the activator must be stable up to the melting point of the polyamide component.

As preferred examples of the nucleophilic reagent, the following might be mentioned: Compounds containing at least one carboxylate group, compounds containing at least one amino group, compounds containing at least one hydroxyl group, compounds containing at least one alkoxide group, phosphate compounds, pyrophosphate compounds, or polyphosphate compounds. According to one preferred embodiment, the nucleophilic reagent consists of a copolymer of vinyl alcohol and ethylene (EVOH). In this case, the polyamide is subjected to alcoholysis. As activator (hydrogen donor), use may be made of any optional activator, with the proviso that the activator is stable up to the melting point of the polyamide component. As preferred examples, mention might be made of compounds containing at least one carboxyl group, such as polycarboxylic acids, dicarboxylic acids, or simple carboxylic acids. One preferred aliphatic carboxylic acid is adipic acid, and one preferred aromatic carboxylic acid is phthalic acid (together with its isomers). Fatty acids such as stearic acid have proved to be highly suitable. An extremely suitable activator according to the present invention is marketed under the trade name "Admer QF 551".

The skilled reader of this specification will readily perceive that the nucleophilic reagent and the activator may be selected from a large number of compounds, but that this number is drastically limited as a consequence of the requirement of stability at the melting point of the polyamide. A standard value of the melting point (for selection of "stable" reagent) is set at approx. 250° C, with upward and downward variations by some ten degrees. The stability requirement may also be expressed such that the nucleophilic reagent and, where applicable, the activator must have retained ability to react with the polyamide under temperature conditions about its melting temperature.

As was mentioned above, according to one preferred embodiment, the nucleophilic reagent is selected from among carboxylates, amines, alcohols and phosphate compounds. As representative examples of compounds within these categories and observing the stability requirement, mention might be made of ionomeric material of such type as is marketed under the trade mark "Surlyn"; salts of organic acids, such as calcium stearate; tetraethylene pentamine; polyethylene glycol 400 or 600; EVOH and tetrasodium phosphate.

While not being linked to any theory, it is believed that the improvement of the oxygen barrier properties is because the groups in the activated polyamide are, as a result of the restructuring, more sensitive to reaction with oxygen in the presence of metal ions than the non-activated polyamide. In other words, when a container is exposed to an oxygenaceous atmosphere, oxygen is entrapped in the barrier layer or barrier layers and reacts with the activated polyamide. Oxygen being consumed in the layer, no passage of oxygen will take place therethrough. In cases of a barrier layer containing activated polyamide, the "scavenger" effect occurs immediately, i.e. without any aftertreatment.

According to one preferred embodiment, the activated polyamide is present as a "masterbatch" to which is added, prior to forming into containers (or parts thereof), other polymer or polymers. This "masterbatch" or this barrier concentrate is suitably present in the form of granules or pellets, which considerably facilitates the admixture of other polymers. The fact that the activated polyamide is present as a "masterbatch" enjoys the major advantage that freedom of choice concerning materials is increased, and further that containers which - for certain reasons - are produced of plastic material possessing no barrier properties, may be provided with oxygen barrier properties by the admixture of a relatively minor quantity of the above-mentioned "masterbatch". However, the quantity of this "masterbatch" is not critical as long as the desired effect is achieved. The quantity is determined by such factors as that barrier effect which is intended, its durability, the polymer material or polymer materials which are to be admixed, the contents of the finished container, etc. In the selection of quantity, such factors as economy and toxicity are also considered. As a non-restrictive quantity range for the activated polyamide, mention might be made of 1-15 weight-%, although as a rule smaller quantities are to be preferred, preferably within the range of between 1 and 5 weight-%. Hence, the activated polyamide constitutes a minor fraction of the layer or layers, while another polymer or polymers constitute the major fraction. The polymer or polymers forming the major fraction of the layer are also designated matrix or structure polymers. It is surprising that a smaller quantity of activated polyamide in relation to the state of the art is required for achieving an improved oxygen barrier effect.

As non-restrictive examples of matrix or structure polymers for mixing with the activated polyamide prior to forming of the container, mention might be made of polyethylene terephthalate (PET), polyethylene, polypropylene and polyamide. In order to improve homogeneity, use is made, in certain cases, of a so-called compatibilizer, for example an ionomer of Surlyn type.

Prior to mixing in the structure polymer, there is incorporated, according to one embodiment, an activating metal (oxidation catalyst), such as Co, Fe, Mn, Cu, etc therein, for example in that the structure polymer in granulate form is mixed with a salt of the metal and the thus treated granules are compounded in an extruder and granulated once again.

According to another embodiment, there is incorporated, prior to mixing in the structure polymer, an activating metal (oxidation catalyst), such as Co, Fe, Mn, Cu, etc in the activated polyamide for example in the same manner as in the case of the structure polymer, as described above. In this embodiment, the masterbatch must be protected against the action of oxygen from production to use, for instance by being packed in bags of aluminium foil.

According to yet a further embodiment, no active admixture of metal compound takes place in the structure polymer, use being made instead of the residual quantities of metal which are already present in the polymer and which derive from catalysts employed in the production of the structure polymer. The granules of the structure polymer and the granules of the activated polyamide are thereafter mixed in suitable portions prior to production of the container.

The mixing of structure polymer and activated polyamide is effected by mixing the components each one in the molten state. For example, both of the polymers may initially be individually present as granules or pellets. Each one of the components is weighed separately and then mixed physically in a suitable device, possibly with additives. After possible drying, a substantially uniform polymer melt mixture can be achieved. A suitable method of forming the "mixture" is by melt-extrusion. In the extruder, the polymers are mixed in the molten state and, thereafter, the mixture is extruded in the form of a strand which, after "hardening" can be cut or otherwise comminuted into granules or pellets which may thereafter be formed into objects in a conventional manner. The temperature in the extruder is adapted to the properties of the polymers and is as a rule 200-400 °C, suitably 230-300 °C, and preferably 240-270 °C.

The invention will now be described in greater detail below with particular reference to the appended examples.

### EXAMPLE 1

### Production of activated polyamide (masterbatch)

Granulate of nucleophilic agents (e.g. Selar OH 3003 (EVOH), 10 weight-%), possible activator (e.g. Admer QF 551, 2 weight-%) and polyamide (e.g. MXD6 6001, the remainder) were mixed and extruded using an extruder (AXON, type BX-25) with single screw and five heating zones (235-245 °C, 240-250 °C, 240-250 °C, 240-250 °C, 250-260 °C) in strands which were thereafter comminuted in a granulator. The thus produced granulate was dried at 70 °C for 4-5 hours and packed air-tight in bags of aluminium foil.

### EXAMPLE 2

### Production of containers and measurement of OTR

Containers were produced from a mixture of a structure polymer (PET, PP or PA) and activated polyamide so that the weight quantities indicated in Tables I-III were achieved. The mixture contained metal ions which, on certain occasions, were added actively and on other occasions consisted of catalyst residues. Of the mixture of structure polymer and active polyamide, packaging was produced with the aid of the conventional technique described below, whereafter the oxygen barrier effect (OTR measurement) is indicated in Tables I-III.

**TABLE I**

| **Experiment No** | **Structurepolymer (weight-%)** | **Cobalt ppm** | **ACTIVATED POLYAMIDE (Weight-%)** | | | **OTR-measurem. (cc/24h)** |
|---|---|---|---|---|---|---|
| | | | **MXD6 6001** | **EVOH** | **Admer QF 551** | |
| REF 1 | PET* (100) | 30 | - | - | - | 0,0160 |
| REF 2 | PET*/MXD6 (95/5) | 30 | - | - | - | 0,0122 |
| REF 3 | PET*/EVOH (95/5) | 30 | - | - | - | 0.0114 |
| REF 4 | PET*/EVOH (95/5) | 270** | - | - | - | 0,0111 |
| I | PET* (95,0) | 150** | 4,5 | 0,50 | - | <0,001**** |
| II | PET* (95,0) | 165** | 4,5*** | 0,25*** | - | <0,001 |
| III | PET* (97,5) | 280** | 2,3 | 0,25 | - | <0,0047 |
| IV | PET* (97,5) | 150** | 2,3 | 0,25 | - | 0,0056 |
| V | PET* (98,5) | 270** | 1,4 | 0,14 | - | 0,0084 |
| VI | PET* (95,0) | 160** | 4,4 | 0,50 | 0,10 | <0,001 |
| VII | PET* (95,0) | 30 | 4,4 | 0,50 | 0,10 | 0,0020 |

| | | | | | | |
|---|---|---|---|---|---|---|
| * ARNITE D-02-300 GL | | | | | | |
| ** doped | | | | | | |
| *** mixture of MXD6 6001/activated polyamide 1:1 | | | | | | |
| **** lower measurement limit | | | | | | |

**TABLE II**

| **Experiment No** | **Structurepolymer (weight-%)** | **Cobalt ppm** | **Act. polyamide (weight-%)** | | **Compatibilizor (weight-%)** | **OTR-measurement (cc/24h)** |
|---|---|---|---|---|---|---|
| | | | **MXD6 6001** | **EVOH** | | |
| REF 5 | PP*/MXD6 (90/10) | 330 | - | - | - | 0,1360 |
| VIII | PP*(88,4) | 270 | 10 | | Ca-stearate **(0,6) | 0,0180 |
| IX | PP*(79,0) | 300 | 10 | 1 | SURLYN 1706 (10) | 0,0280 |

| | | | | | | |
|---|---|---|---|---|---|---|
| * PROPATHENE PXC 22265 | | | | | | |
| ** RIEDEL - DE HAEN 24611 | | | | | | |

**TABLE III**

| **Experiment No** | **Structurepolymer (weight-%)** | **Copper ppm** | **Act. polyamide (weight-%)** | | **OTR-measurement) (cc/24h)** |
|---|---|---|---|---|---|
| | | | **Polyamide** | **EVOH** | |
| REF 6 | PA6*(100) | <1 | - | - | 0,0026 |
| X | PA6*(96,6) | 925 | PA6* (3,0) | 0,33 | <0,001 *** |
| REF 7 | PA66** (100) | <1 | - | - | 0,0037 |
| XI | PA66** (96,6) | 800 | PA66** (3,0) | 0,33 | <0,001 |

| | | | | | |
|---|---|---|---|---|---|
| * ULTRAMID B4K | | | | | |
| ** ULTRAMID A4K | | | | | |
| *** lower measurement limit | | | | | |

Departing from each one of the mixtures disclosed in Tables I-III, containers were manufactured using the technique selected below by way of example. For a complete disclosure, it might be mentioned that both the activated polyamide and the structure polymer intended for admixture were present in granulate form and that the drying conditions prior to infeed in the injection moulding machine corresponded to those recommended by each respective supplier. According to one preferred embodiment, the granules of activated polyamide and the granules of structure polymer are dried separately before being mixed with one another.

After the granules have dried, for example at a temperature of 100-140 °C for 10h, the granules were fed into an injection moulding machine where, in accordance with conventional technique, they were melted and the preform was injected of the molten material. The material was kept in the compression section of the injection moulding machine at a temperature within the range of between 255 and 280 °C, preferably between 260 and 275 °C, and also in the injection nozzle as a rule within the same temperature range. The material in the preform was rapidly cooled in order to form amorphous material. The amorphous preform was thereafter reformed into a container. In certain practical applications, this took place in that the preform of amorphous material was expanded in the axial direction of the mould and/or in its circumferential direction to form an intermediate preform, which hence, came to consist of thinner material than the preform and preferably of at least monoaxially oriented material. The intermediate preform thereafter underwent additional expansion so as to be reformed into the container. In other practical applications, the preform was reformed into the container in a single forming stage.

In one preferred embodiment, the intermediate preform was formed in accordance with the technique described in US-A-4 405 546 and GB-A-2 168 315. The technique described in both of these patent specifications entails that the material in the walls of the preform passes, under temperature control, a gap whereupon the material thickness is reduced during simultaneous stretching of the material in the axial direction of the preform. In such instance, there is obtained a monoaxial orientation of the material in the axial direction of the preform. As a rule, the gap width is selected so as to be sufficiently small to realize material displacement in the transition zone between amorphous material and material with reduced wall thickness, i.e. oriented material. A mandrel is inserted in the thus formed intermediate preform, the circumference of the mandrel in cross section exceeding the inner cross section of the intermediate preform, whereby the intermediate preform is expanded in the circumferential direction under abutment against the mandrel. As a result of the expansion, good contact will be obtained between the material wall in the intermediate preform and the outer defining surface of the mandrel. In the experiments, the surface temperature of the mandrel was in excess of 90 °C, preferably in excess of 150 °C, which entailed that the oriented material underwent a shrinkage in the axial direction of the preform. In the experiments, it surprisingly proved possible to carry out the material shrinkage within a very large temperature range, namely the range of between 90 and 245 °C. As a result of the heat treatment, the material also obtained a thermally conditioned crystallization in addition to the crystallization which occurred as a result of the orientation of the material. The expanded intermediate preform, shrunk in the axial direction, was thereafter generally trimmed, so as to form an even mouth edge. In addition, where applicable the mouth was, by reforming, given dimensions adapted to a seal or closure.

In yet a further embodiment, a preform was produced using a so-called two layer injection moulding machine, i.e. an injection moulding machine displaying a multi layer nozzle, the flow emitted by the nozzle comprising PET and a mixture of PET and activated MXD6 in accordance with experiments I-VII in Table I above. A preform of circular cross section was produced in this instance, comprising additionally a closed bottom, the outside of the preform consisting of PET and the inside consisting of each respective mixture according to experiments 1:1I-VII in Table I above.

According to a further embodiment, after the customary drying, the granules consisting of each of the mixtures according to experiments I-VII were fed into an injection moulding machine of conventional design so as to produce a finished container in one single operational phase.

According to still a further preferred embodiment, the layer included in the container consists of a lacquer layer which, by incorporation of the activated polyamide, has obtained improved oxygen barrier properties. Such layers are generally applied by injection or coating on the inside of cans (of plastical metal), lids or the like. By replacing the polyamide component in conventional polyamide-based lacquers wholly or partly by the activated polyamide, these will obtain oxygen barrier properties as a result of which the shelf-life of contents in containers provided with lacquer layers of such composition will be greatly increased. As a non-restrictive example of lacquer with "scavenger" effect, mention might be made of thermosetting dual-component polyamide lacquer which, for instance, consists of an epoxy component and a polyamide component. This latter consists, for example, of a partially split condensation product of finally-divided vegetable oil acid and polyamino compounds. This lacquer type is resistant to chemicals, including solvents and water, and affords good corrosion protection when applied to substrates of, for instance, aluminium and steel. Certain beer varieties are highly sensitive to an oxygenaceous environment and undergo flavour deterioration when they are stored in such an environment. If these beer varieties are stored in containers (cans, bottles) interiorly coated with a lacquer and/or whose seal is interiorally coated with a lacquer of the above-described type, any tendencies to flavour deterioration by reaction with the residual volume of oxygen which is present in the "head-space" on sealing will be eliminated.

Another example of a preferred lacquer is a thermosetting one-component polyamide lacquer which, for example, consists of a combination of an activated polyamide (with free amino groups) and phenolic resin. Setting takes place at 150 °C or higher. A set thin layer (5-10 µm) of such a lacquer has excellent oxygen barrier properties and is, moreover, resistant to most chemicals, for which reason it is extraordinarily well suited for practical applications in which an oxygenaceous environment is harmful.

One highly preferred lacquer is an epoxy-urea-formaldehyde lacquer which, as a result of its modified amide group structure, displays a "scavenger" effect.

A number of preferred embodiments have been described in the foregoing in respect of the practical application of the present invention, i.e. in the production of containers, particularly for packaging purposes, including embodiments in which multilayer structures have been employed, but the present invention is by no means restricted to these disclosed embodiments, it lying within the area of competence of a person skilled in this art to apply any optional prior art technique for producing containers of the type under consideration herein.

## Claims

1. A container having, for example, a wall, a bottom or a mouth portion, the container comprising at least one layer which contains a plastics material and ions of at least one metal, **characterized** in that the plastics material at least partly consists of a partially split or degraded polyamide which, as a result of its increased sensitivity to reaction with oxygen in the presence of metal, gives the layer improved oxygen barrier properties.

2. The container as claimed in claim 1, **characterized** in that the polyamide has been obtained by thermal degradation or by a polyamide having been caused to react with a nucleophilic reagent, possibly in the presence of an activator, under the melting conditions of the polyamide.

3. The container as claimed in claim 1**, characterized** in that the layer is formed from a structure polymer and the partially split or degraded polyamide.

4. The container as claimed in claim 3, **characterized** in that the partially split polyamide is included in the layer in an amount of between 1 and 15 weight-%, preferably between 1 and 5 weight-%.

5. The container as claimed in claim 3 or 4, **characterized** in that the structure polymer consists of polyethylene terephthalate, polyethylene, polypropylene or polyamide; **and that** the partially split polyamide consists of partially split poly-m-xylylene-adipamide, nylon 6, or nylon 6.6.

6. The container as claimed in claim 1, **characterized** in that the layer is a lacquer layer.

7. A process for producing a container having, for example, a wall, a bottom or a mouth portion, the container comprising at least one layer which contains a plastics material and ions of at least one metal, **characterized** in that in the production of the container, a plastics material is selected in which is included a partially split polyamide so as to impart to the container improved oxygen barrier properties.

8. The process as claimed in claim 7, **characterized** in that a structure polymer is caused to be present in the mixture with the partially split polyamide.

9. The process as claimed in claim 7 or 8, **characterized** in that the partially split polyamide is formed by thermal degradation or by an optional polyamide being caused to react with a nucleophilic reagent, possibly in the presence of an activator, the nucleophilic reagent and the activator being selected such that they are stable up to the melting point of the polyamide.

10. The process as claimed in claim 9, **characterized** in that the nucleophilic reagent consists of a copolymer of vinyl alcohol and ethylene (EVOH).

11. Use of a partially split polyamide in the presence of ions of at least one metal in the production of containers in order to impart to these or parts thereof improved oxygen barrier properties.

## Patentansprüche

1. Behälter mit beispielsweise einer Wandung, einem Boden oder einem Mündungsbereich, wobei der Behälter mindestens eine ein Kunststoffmaterial und Ionen mindestens eines Metalls enthaltende Schicht umfaßt, dadurch gekennzeichnet, daß das Kunststoffmaterial mindestens teilweise aus einem partiell gespaltenen oder abgebauten Polyamid besteht, das als Ergebnis seiner erhöhten Empfindlichkeit gegenüber einer Reaktion mit Sauerstoff in Anwesenheit von Metallen der Schicht verbesserte Sauerstoffsperreigenschaften verleiht.

2. Behälter nach Anspruch 1, dadurch gekennzeichnet, daß das Polyamid durch thermischen Abbau oder durch Reaktion eines Polyamids mit einem nucleophilen Reagens, gegebenenfalls in Anwesenheit eines Aktivators, unter Schmelzbedingungen des Polyamids erhalten wurde.

3. Behälter nach Anspruch 1, dadurch gekennzeichnet, daß die Schicht aus einem Strukturpolymer und dem partiell gespaltenen oder abgebauten Polyamid gebildet ist.

4. Behälter nach Anspruch 3, dadurch gekennzeichnet, daß das partiell gespaltene Polyamid in der Schicht in einer Menge zwischen 1 und 15 Gew.-%, vorzugsweise zwischen 1 und 5 Gew.-%, enthalten ist.

5. Behälter nach Anspruch 3 oder 4, dadurch gekennzeichnet, daß das Strukturpolymer aus Polyethylenterephthalat, Polyethylen, Polypropylen oder Polyamid besteht, und daß das partiell gespaltene Polyamid aus partiell gespaltenem Poly-m-xylylenadipamid, Nylon 6 oder Nylon 6.6, besteht.

6. Behälter nach Anspruch 1, dadurch gekennzeichnet, daß die Schicht eine Lackschicht ist.

7. Verfahren zur Herstellung eines Behälters mit beispielsweise einer Wandung, einem Boden oder einem Mündungsbereich, wobei der Behälter mindestens eine ein Kunststoffmaterial und Ionen mindestens eines Metalls enthaltende Schicht umfaßt, dadurch gekennzeichnet, daß bei der Herstellung des Behälters ein Kunststoffmaterial ausgewählt wird, dem ein partiell gespaltenes Polyamid zugesetzt wird, so daß es dem Behälter verbesserte Sauerstoffsperreigenschaften verleiht.

8. Verfahren nach Anspruch 7, dadurch gekennzeichnet, daß ein Strukturpolymer dem Gemisch mit dem partiell gespaltenen Polyamid zugesetzt wird.

9. Verfahren nach Anspruch 7 oder 8, dadurch gekennzeichnet, daß das partiell gespaltene Polyamid durch thermischen Abbau gebildet wird, oder daß gegebenenfalls ein vorhandenes Polyamid mit einem nucleophilen Reagens umgesetzt wird, gegebenenfalls in Anwesenheit eines Aktivators, wobei das nucleophile Reagens und der Aktivator so ausgewählt sind, daß sie bis zu dem Schmelzpunkt des Polyamids stabil sind.

10. Verfahren nach Anspruch 9, dadurch gekennzeichnet, daß das nucleophile Reagens aus einem Copolymer aus Vinylalkohol und Ethylen (EVOH) besteht.

11. Verwendung eins partiell gespaltenen Polyamids in Anwesenheit von Ionen mindestens eines Metalles bei der Herstellung von Behältern, um diesen oder Teilen derselben verbesserte Sauerstoffsperreigenschaften zu verleihen.

## Revendications

1. Récipient ayant par exemple une paroi, un fond ou une partie d'ouverture, le récipient comprenant au moins une couche qui contient un matériau plastique et des ions d'au moins un métal, caractérisé en ce que le matériau plastique est constitué au moins partiellement d'un polyamide partiellement coupé ou dégradé qui, par suite de sa sensibilité améliorée à une réaction avec l'oxygène en présence d'un métal, donne à la couche des propriétés améliorées de barrière à l'oxygène.

2. Récipient selon la revendication 1, caractérisé en ce qu'on a obtenu le polyamide par une dégradation thermique ou par un polyamide dont on a provoqué la réaction avec un réactif nucléophile, éventuellement en présence d'un agent activant, dans les conditions de fusion du polyamide.

3. Récipient selon la revendication 1, caractérisé en ce qu'on forme la couche à partir d'un polymère de structure et du polyamide partiellement coupé ou dégradé.

4. Récipient selon la revendication 3, caractérisé en ce que le polyamide partiellement coupé est inclus dans la couche à raison de 1 à 15 % en masse, de préférence de 1 à 5 % en masse.

5. Récipient selon la revendication 3 ou 4, caractérisé en ce que le polymère de structure est constitué de poly(téréphtalate d'éthylène), de polyéthylène, de polypropylène ou de polyamide, et en ce que le polyamide partiellement coupé est constitué de poly-m-xylylèncadipamide, de Nylon 6 ou de Nylon 6.6 partiellement coupé.

6. Récipient selon la revendication 1, caractérisé en ce que la couche est une couche de laque.

7. Procédé de production d'un récipient ayant par exemple une paroi, un fond ou une partie d'ouverture, le récipient comprenant au moins une couche qui contient un matériau plastique et des ions d'au moins un métal, caractérisé en ce que pour la production du récipient, on choisit un matériau plastique dans lequel on inclut un polyamide partiellement coupé de manière à donner au récipient des propriétés améliorées de barrière à l'oxygène.

8. Procédé selon la revendication 7, caractérisé en ce qu'on fait en sorte que le polymère de structure soit présent dans le mélange avec le polyamide partiellement coupé.

9. Procédé selon la revendication 7 ou 8, caractérisé en ce qu'on forme le polyamide partiellement coupé par une dégradation thermique ou par un polyamide éventuel dont on a provoqué la réaction avec un réactif nucléophile, éventuellement en présence d'un agent activant, le réactif nucléophile et l'agent activant étant choisis de sorte qu'ils sont stables jusqu'au point de fusion du polyamide.

10. Procédé selon la revendication 9, caractérisé en ce que le réactif nucléophile est constitué d'un copolymère d'alcool vinylique et d'éthylène (EVOH).

11. Utilisation d'un polyamide partiellement coupé en présence d'ions d'au moins un métal pour la production de récipients afin de donner à ces récipients ou à ses parties des propriétés améliorées de barrière à l'oxygène.
